# EUROPÄISCHE PATENTSCHRIFT

(11) **EP 1 766 206 B1**
(45) Veröffentlichungstag und Bekanntmachung des Hinweises auf die Patenterteilung: **13.06.2012**
(21) Anmeldenummer: 05767862.5
(22) Anmeldetag: 13.07.2005
(51) Int. Cl.: F01P 11/06

(54) **KÜHLMITTEL-PFLEGE-EINHEIT MIT RÜCKLAUFSPERRVENTIL**
COOLANT CONDITIONING UNIT COMPRISING A NON-RETURN VALVE
UNITE D'ENTRETIEN DU LIQUIDE DE REFROIDISSEMENT POURVUE D'UN CLAPET ANTIRETOUR

(30) Priorität: 14.07.2004 DE 202004011104 U; 16.11.2004 DE 202004017745 U
(43) Veröffentlichungstag der Anmeldung: 28.03.2007
(73) Patentinhaber: Hengst GmbH & Co. KG, 48147 Münster (DE)
(72) Erfinder: SCHACHTRUP, Ludger, 48163 Münster (DE); EBERLE, Richard, 48161 Münster (DE)
(74) Vertreter: Habbel, Ludwig
(86) Internationale Anmeldenummer: PCT/DE2005/001240
(87) Internationale Veröffentlichungsnummer: WO 2006/005331

(56) Entgegenhaltungen:
- US-A- 3 682 308
- US-A- 5 560 824
- US-A- 5 753 116
- US-A1- 2002 036 162

## Beschreibung

Die Erfindung betrifft eine Kühlmittel-Pflege-Einheit nach dem Oberbegriff des Anspruchs 1.

Derartige Kühlmittel-Pflege-Einheiten sind beispielsweise aus der Praxis und aus der US 5 753 116 A bekannt. Sie bieten einerseits die Möglichkeit, durch Filtrierung des Kühlmittels dessen Einsatzdauer zu verlängern. Zudem ist bei derartigen Pflegeeinheiten üblicherweise vorgesehen, beim Wechsel des Filtereinsatzes eine Kartusche mit Pflegemittel zu verwenden, die beim Einsatz des Filtereinsatzes in das Gehäuse automatisch geöffnet wird und Pflegezusätze in den Kühlmittelkreislauf einführt, beispielsweise sogenannt "Inhibitoren" welche beispielsweise als Frost- und Korrosionsschutz dienen können.

Häufig erfolgt der so genannte Filterwechsel bei derartigen Kühlmittel-Pflege-Einheiten, also der Wechsel des Filtereinsatzes, wenn das Kühlmittel noch eine vergleichsweise hohe Temperatur aufweist und das Kühlmittelsystem unter Druck steht.

Der Erfindung liegt die Aufgabe zugrunde, eine gattungsgemäße Kühlmittel-Pflege-Einheit dahingehend zu verbessern, dass diese einen gefahrlosen Wechsel des Filtereinsatzes und insbesondere ein gefahrloses Öffnen des Kühlmittelfilters ermöglicht. Diese Aufgabe wird durch eine Kühlmittel-Pflege-Einheit mit den Merkmalen des Anspruchs 1 gelöst.

Die Erfindung schlägt mit anderen Worten vor, den Innenraum des Filtergehäuses gegenüber dem übrigen Kühlmittelkreislauf abzusperren, so dass im Kühlmittelkreislauf herrschender Überdruck nicht dazu führen kann, dass heißes Kühlmittel aus dem Filtergehäuse austritt bzw. herausspritzt, wenn der Deckel vom Gehäuse abgenommen wird. Der im Filtergehäuse selbst herrschende Druck wird dadurch abgebaut, dass der Deckel abgenommen wird und sich währenddessen das im Filtergehäuse befindliche Kühlmittel entspannen kann, bevor der Deckel vollständig abgenommen und der Dichtungsverbund zwischen Deckel und Gehäuse aufgehoben ist.

Die Absperrung gegenüber dem übrigen Kühlmittelkreislauf erfolgt an zwei Stellen, nämlich am Kühlmittelzufluss wie auch am Kühlmittelrückfluss. In diesem Rückfluss kann ein Rückschlagventil vorgesehen sein, so dass, durch die Kühlmittelpumpe angetrieben, während des normalen Betriebs auf der Reinseite des Kühlmittelfilters ein größere Druck herrscht als im übrigen Kühlmittelkreislauf, wobei als "übriger Kühlmittelkreislauf" die Stellen des Kühlmittelkreislauf im Rahmen des vorliegenden Vorschlags verstanden werden, die unmittelbar an die erwähnten, vorschlagsgemäß vorgesehenen Ventile anschließen. Aufgrund der Druckdifferenz öffnet das Rückschlagventil während des normalen Betriebs. Bei einem Filterwechsel oder wenn aus anderen Gründen der Kühlmittelfilter geöffnet wird und im Filterinneren der Druck entspannt wird, herrscht dort ein geringerer Druck als im übrigen Kühlmittelkreislauf, so dass das erwähnte Rückschlagventil im Rücklauf sperrt.

Im Zulauf ist ein Sperrventil vorgesehen, welches nicht druckbetätigt, sondern wegbetätigt öffnet bzw. schließt. Durch den Filtereinsatz wird der bewegliche Ventilkörper dieses Sperrventils in seine Offenstellung gedrängt. Wird der Deckel vom Gehäuse abgenommen, so wird dabei gleichzeitig auch der Filtereinsatz bewegt, der mit dem Deckel verbunden ist, beispielsweise durch eine Clipsverbindung. Durch diese Bewegung des Filtereinsatzes wird auch die Beaufschlagung, mit der der Filtereinsatz auf den Ventilkörper des Sperrventils einwirkt, verringert und der Ventilkörper kann beispielsweise federbelastet in seine Schließstellung geführt werden, je weiter der Deckel vom Gehäuse des Filters abgenommen und der Filtereinsatz dementsprechend ebenfalls bewegt wird. An Stelle der vorerwähnten Feder kann eine Bewegung des Ventilkörpers auch ausschließlich aufgrund des Drucks vorgesehen sein, der im übrigen Kühlmittelkreislauf herrscht, so dass bei Entfernung des Filtereinsatzes vom Ventilkörper das Sperrventil nicht weiterhin zwangsweise geöffnet verbleibt, sondern dem Druck im Kühlmittelkreislauf folgend in seine Schließstellung gedrückt werden kann.

Vorschlagsgemäß ist zudem ein aus konstruktiven Gründen unnötig großes Maß an Überlappung zwischen dem Deckel und dem Gehäuse des Filters vorgesehen. Eine Dichtung stellt unter den üblichen Betriebsbedingungen die zuverlässige Dichtheit zwischen Deckel und Gehäuse sicher. Durch den großen Überlappungsbereich wird diese Dichtheit auch dann noch sichergestellt, wenn der Deckel bereits teilweise vom Gehäuse entfernt ist. Auf diese Weise wird ein Bewegungsspielraum für den Deckel geschaffen, der benutzt werden kann, um während dieser Bewegung das Sperrventil zu schließen und gleichzeitig nach außen hin, also zum Anwender hin, das Innere des Filters zuverlässig abzudichten, so dass der Anwender vor austretendem Kühlmittel zuverlässig geschützt ist. Erst nach einer Wegstrecke, die zuverlässig zum Schließen des Sperrventils geführt hat, kommt der Deckel von dem Gehäuse so weit frei, dass auch die Dichtung nicht mehr zwischen Deckel und Gehäuse wirksam ist. In dieser Stellung des Deckels ist jedoch dadurch, dass das Sperrventil und das druckabhängig betätigte Rückschlagventil den Filterinnenraum gegenüber dem übrigen Kühlmittelkreislauf abgesperrt haben, kein unerwartetes Austreten von unter Druck stehendem Kühlmittel aus dem Filterinnenraum mehr möglich, so dass nun eine sichere Entnahme des Filtereinsatzes möglich ist.

Vorteilhaft kann der Filtereinsatz in an sich bekannter Weise als etwa zylindrischer Einsatz ausgestaltet sein mit einer oberen Endscheibe, welche beispielsweise die Rastmittel zur Verbindung mit dem Deckel aufweist und mit einer unteren Endscheibe, welche als Druckplatte dem Ventilkörper anliegt bzw. mittelbar oder unmittelbar auf den Ventilkörper einwirkt und diesen in seine Offenstellung drängt, wenn sich der Filtereinsatz in seiner Betriebsstellung befindet.

Vorteilhaft kann ein Stößel vorgesehen sein, der an den Ventilkörper anschließt und sich bis zur Endscheibe des Filtereinsatzes erstreckt. Auf diese Weise kann problemlos eine Anordnung des Ventilkörpers und der zugehörigen Dichtfläche des Sperrventils an einer geeigneten Stellung vorgesehen sein, die möglicherweise von der Endscheibe des Filtereinsatzes entfernt ist, wobei der Stößel diese Entfernung überbrückt und die Beaufschlagung des Ventilkörpers durch die Endscheibe ermöglicht.

Die vorerwähnte Endscheibe kann vorzugsweise in dem Bereich verstärkt sein, welcher auf das Sperrventil einwirkt. Auf diese Weise kann die Endscheibe grundsätzlich materialsparend ausgestaltet sein, während sie lediglich in dem erforderlichen Bereich ausgesteift ist, welcher auf das Sperrventil einwirkt, so dass eine zuverlässige Betätigung des Sperrventils sichergestellt ist und Verformungen der Endscheibe, wie sie unter den im Betrieb auftretenden Temperaturen und Drücken auftreten könnten, ausgeschlossen sind.

Diese vorgenannte Verstärkung der Endscheibe kann beispielsweise durch eine umlaufende Wulst bewirkt werden. Ausführungsbeispiele der Erfindung werden anhand der rein schematischen Zeichnungen nachfolgend näher erläutert. Dabei zeigen die
- Fig. 1: insgesamt einen Querschnitt durch eine Kühlmittel-Pflege-Einheit eines ersten Ausführungsbeispiels,
- Fig. 2: den Bereich des Sperrventils der Einheit von Fig. 1 in gegenüber Fig. 1 vergrößertem Maßstab, die
- Fig. 3 und 4: Ansichten ähnlich den Fig. 1 und 2, jedoch von einem zweiten Ausführungsbeispiel, und die
- Fig. 5 und 6: Ansichten ähnlich den Fig. 1 und 3, jedoch von einem dritten Ausführungsbeispiel, mit zwei unterschiedlich weit aufgeschraubten Stellungen des Deckels.

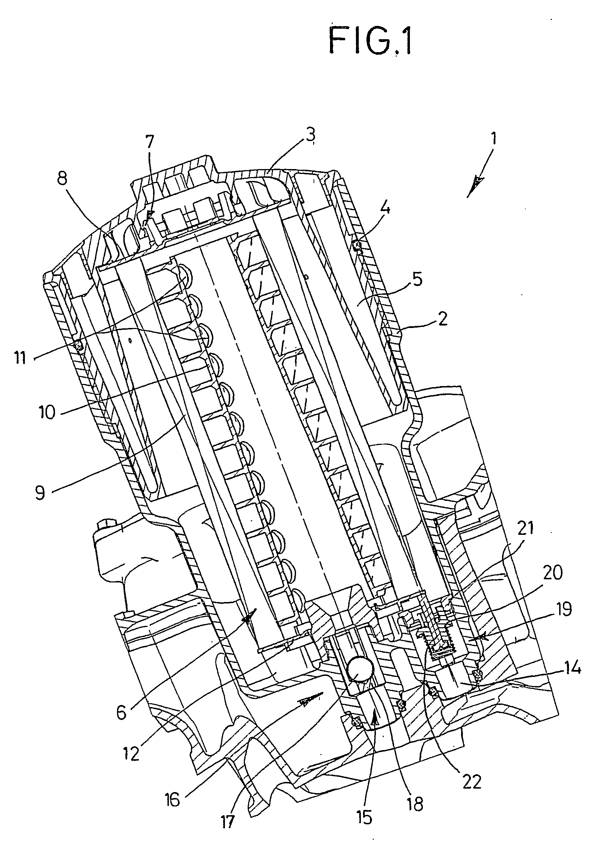

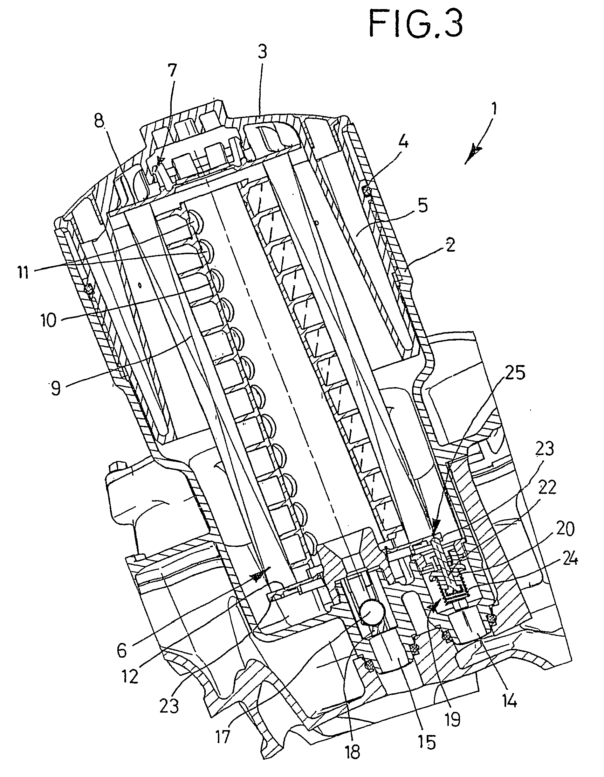

In den Fig. 1 und 3 ist jeweils mit 1 insgesamt eine Kühlmittel-Pflege-Einheit bezeichnet. Diese weist ein becherartiges Gehäuse 2 auf sowie einen Deckel 3, der als Schraubdeckel ausgestaltet ist und mit dem Gehäuse 2 verschraubt ist. Zwischen Deckel 3 und Gehäuse 2 ist eine umlaufende O-Ringdichtung 4 vorgesehen. Der Deckel 3 weist einen Verdrängungskörper 5 auf, welcher verhindert, dass der Innenraum des Gehäuses 2 vollständig mit Kühlmittel gefüllt werden kann. Bei Entnahme des Deckels 3 vom Gehäuse 2 wird daher der Flüssigkeitsspiegel im Inneren des Gehäuses automatisch abgesenkt, so dass auch bei Schrägstellungen des Gehäuses 2 in einem im Betrieb üblichen Ausmaß sichergestellt ist, dass kein Kühlmittel über die Oberkante des Gehäuses 2 abfließen kann, sondern zuverlässig innerhalb des Gehäuses 2 verbleibt.

Mit dem Deckel 3 ist ein Filtereinsatz 6 verbunden, und zwar über eine Rastverbindung 7, die an einer oberen Endscheibe 8 des insgesamt im Wesentlichen zylindrisch ausgebildeten Filtereinsatzes 6 vorgesehen ist. Der Filtereinsatz 6 weist ein Filtermedium 9 in Form beispielsweise eines Papierfaltenfilters auf sowie einen inneren Stützdom 10, welcher Durchtrittsöffnungen 11 aufweist. An seinem unteren Ende weist der Filtereinsatz 6 eine untere Endscheibe 12 auf.

Das Kühlmittel strömt durch einen Zulauf 14 radial außerhalb des Filtereinsatzes 6 in das Gehäuse 2 ein. Es gelangt nach Durchtritt durch das Filtermedium 9 in das Innere des Filtereinsatzes 6 und strömt dort durch einen Rücklauf 15 zurück. Im Rücklauf 15 ist ein Rückschlagventil 16 vorgesehen, mit einem als Kugel 17 ausgebildeten Ventilkörper. Das Rückschlagventil 16 ist als sogenanntes Schwimmerventil ausgebildet. Die Kugel 17 liegt bei dem in der Zeichnung dargestellten Betriebszustand einem unteren Anschlag 18 an. Sie kann durch die Wirkung ihres Auftriebs und durch den im übrigen Kühlmittelkreislauf herrschenden Druck angehoben und gegen ihren Ventilsitz gepresst werden, wenn der im Inneren des Gehäuses 2 und insbesondere im Inneren, auf der Reinseite des Filtereinsatzes 6 herrschende Druck entsprechend niedrig gegenüber dem Druck im übrigen Kühlmittelkreislauf unterhalb der Kugel 17 ist.

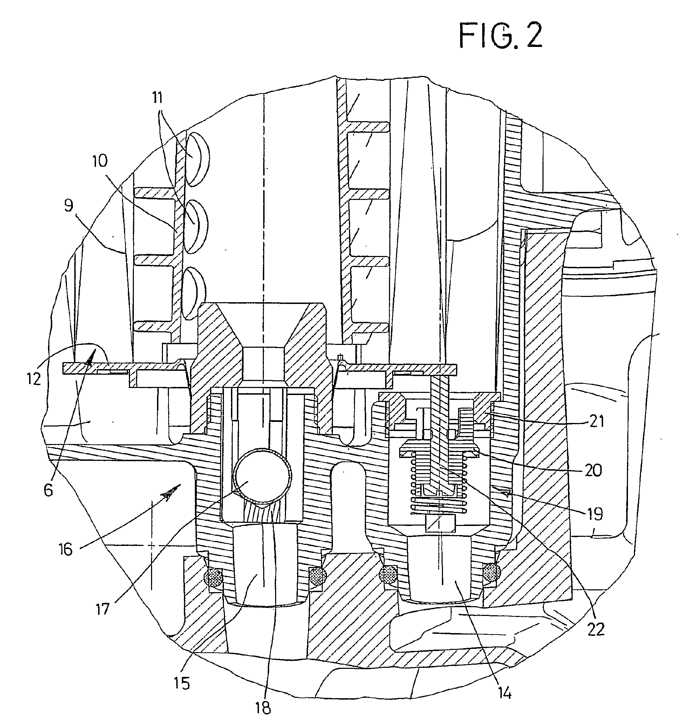

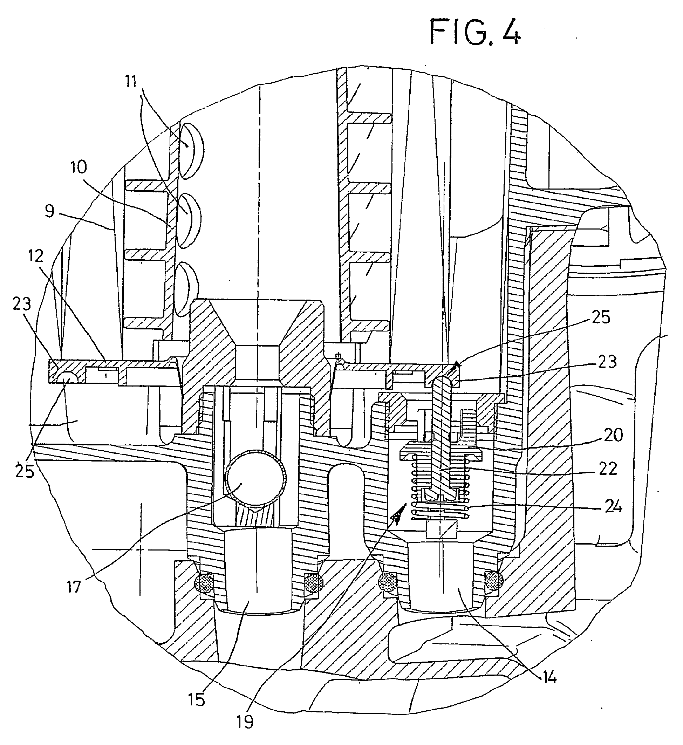

Im Zulauf 14 ist ein insbesondere aus den Fig. 2 und 4 näher ersichtliches Sperrventil 19 vorgesehen. Dieses weist einen beweglichen Ventilkörper 20 auf sowie einen kragenförmigen Ventilsitz 21. Der Ventilkörper 20 ist mit einem Stößel 22 verbunden, gegen den die untere Endscheibe 12 anliegt. Die untere Endscheibe 12 ist bei dem Ausführungsbeispiel der Fig. 3 und 4 entlang ihrem äußeren Umfang durch eine untere umlaufende Wulst 23 verstärkt und auf diese Weise ausgesteift, so dass sie sich nicht unter dem Druck des Stößels 22 verformt und eine unzulässige Schließbewegung des Sperrventils 19 ermöglicht. Zudem bildet die Wulst 23 eine Führungsnut 25 aus, in welcher das obere Ende des Stößels 22 geführt ist.

Die Schließbewegung des Sperrventils 19 wird ermöglicht, wenn der Deckel 3 aus dem Gehäuse 2 herausgeschraubt wird. In diesem Fall bewegt sich auch der Filtereinsatz 6 mitsamt dem Deckel 3 bei der in der Zeichnung vorgesehenen Ausrichtung des Gehäuses 2 nach oben. Bei einer entsprechenden Vorspannung des Sperrventils 19 kann der Stößel 22 und damit der Ventilkörper 20 dieser Bewegung folgen, so dass der Ventilkörper 20 umso näher an den Ventilsitz 21 gerät, je weiter der Deckel 3 von dem Gehäuse 2 gelöst wird.

Die erwähnte Vorspannung des Sperrventils 19 kann entweder durch eine Feder 24 bewirkt sein, wobei der Ventilkörper 20 gegen die Wirkung dieser Feder 24 durch den Filtereinsatz 6 in seiner Offenstellung gehalten wird, oder die erwähnte Vorspannung kann durch den im übrigen Kühlmittelkreislauf herrschenden Druck verwirklicht sein, welcher größer ist als der im Gehäuse 2 herrschende Druck, insbesondere, wenn das wirksame Innenvolumen des Gehäuses 2 vergrößert wird, indem der Deckel 3 abgeschraubt wird.

Aufgrund dieser Druckdifferenz wird der Ventilkörper 20, selbst wenn die dargestellte Feder 24 nicht vorhanden wäre, in seine Schließstellung gedrückt. Sollte jedoch das Gehäuse 2 bei kaltem und insofern drucklosem Kühlmittel geöffnet werden, so würde das Sperrventil 19 nicht geschlossen werden, wenn der Ventilkörper 20 ausschließlich aufgrund des Innendrucks im Kühlmittelkreislauf in seine Schließstellung gedrängt würde. In einem derartigen Fall wäre jedoch auch das plötzliche Austreten heißen Kühlmittels nicht zu befürchten, so dass eine automatische, temperaturabhängige und selbstregelnde Funktion des Sperrventils 19 gegeben wäre.

Unabhängig davon, ob die in der Zeichnung vorgesehene Feder 24 vorhanden ist oder nicht, handelt es sich bei dem Sperrventil 19 um ein wegbetätigtes Ventil, denn die Öffnungsstellung des Ventilkörpers 20 wird in jedem Fall wegabhängig von der Position des Filtereinsatzes erzwungen.

Die Anordnung der am Deckel 3 vorgesehenen Dichtung 4 ist so weit von der Oberkante des Gehäuses 2 beabstandet vorgesehen, dass dieser Abstand größer ist als der Weg, welchen der Ventilkörper 20 aus seiner dargestellten Offenstellung bis in seine Schließstellung zurücklegen muss. Es ist daher sichergestellt, dass das Sperrventil 19 geschlossen ist, wenn während der Abnahme des Deckels 3 vom Gehäuse 2 die Dichtung 4 nach wie vor abdichtend wirksam ist. Erst im weiteren Verlauf dieser Abnahmebewegung des Deckels 3 gelangt die Dichtung 4 an die Oberkante des Gehäuses 2 und verliert ihre Wirksamkeit. In diesem Fall sind jedoch die Rückschlag- und Sperrventile 16 und 19 geschlossen und aufgrund des Verdrängungskörpers 5 ist auch zuverlässig sichergestellt, dass in dem Inneren des Gehäuses 2 kurz bevor die Dichtung 4 ihre Wirksamkeit verliert, kein Überdruck mehr herrscht, der zu einem plötzlichen Austreten heißen Kühlmittels führen könnte.

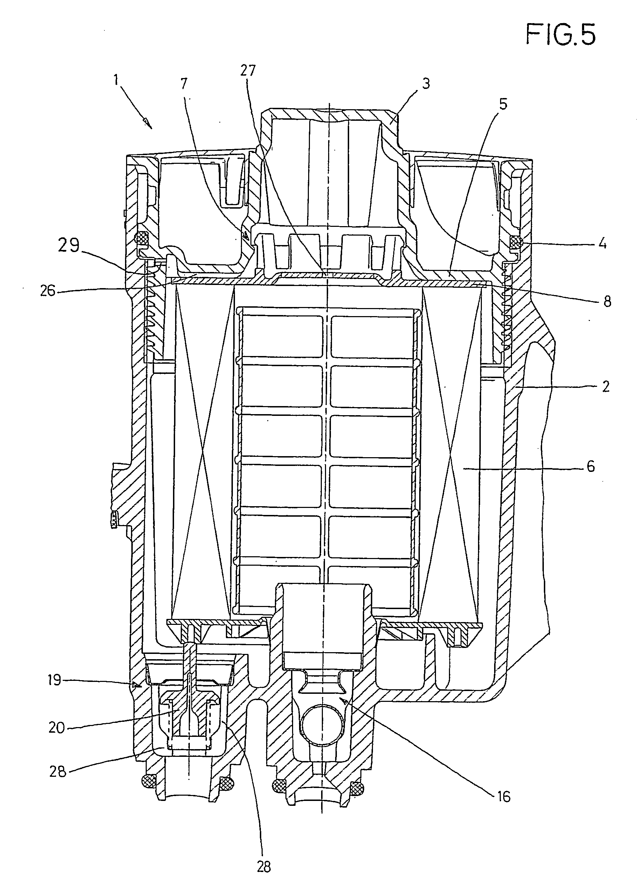

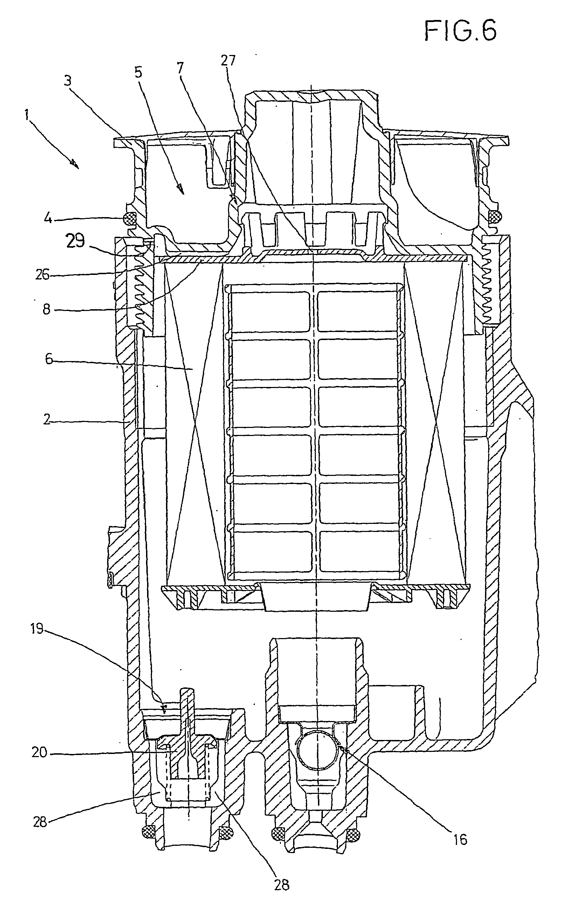

Bei dem Ausführungsbeispiel der Fig. 5 und 6 sind gleiche bzw. gleichwirkende Bauelemente mit denselben Bezugsziffern versehen wie bei den Ausführungsbeispielen der Fig. 1 - 4. Nachfolgend wird lediglich auf die Merkmale Bezug genommen, in denen sich dieses dritte Ausführungsbeispiel von den beiden anderen Ausführungsbeispielen unterscheidet, so dass auch nur die im Zusammenhang damit relevanten Baugruppen bzw. Bauteile erwähnt und in den Zeichnungen mit Bezugsziffern versehen sind.

Fig. 5 zeigt ein drittes Ausführungsbeispiel im betriebsbereiten Zustand, also mit vollständig in das Gehäuse 2 eingeschraubtem Deckel 3. Dabei ist der Verdrängerkörper 5 nicht radial außerhalb des Filtereinsatzes 6 vorgesehen, sondern ausschließlich oberhalb der oberen Endscheibe 8 des Filtereinsatzes 6. Hierdurch kann der radiale Bauraum innerhalb des Gehäuses 2 optimal genutzt werden, so dass entweder ein Filtereinsatz 6 mit sehr breiten Falten verwendet werden kann oder der Durchmesser des Gehäuses 2 vergleichsweise gering gehalten werden kann und auch unter räumlich beengten Verhältnissen noch an einer optimalen Stelle angeordnet werden kann. Die axiale Erstreckung der Kühlmittel-Pflege-Einheit 1 wird durch die Verlagerung des Verdrängungskörpers 5 axial vor den Filtereinsatz 6 zwar größer, jedoch ist in dieser Richtung üblicherweise ausreichend Freiraum vorhanden, da ohnehin für Wartungsarbeiten in dieser Richtung eine Zugänglichkeit zum Deckel 3 vorgesehen ist.

Beim Ausführungsbeispiel der Fig. 5 und 6 ist eine Entlüftungsleitung 26 im Deckel 3 verwirklicht, die zu einer entsprechenden Entlüftungsbohrung 27 in der oberen Endscheibe 8 des Filtereinsatzes 6 führt. Die Entlüftungsleitung 26 ist produktionstechnisch vorteilhaft nicht durch eine Bohrung verwirklicht, sondern durch eine oder mehrere Rippen an der Unterseite des Deckels 3, wo der Deckel 3 den Verdrängerkörper 5 bildet. Alternativ könnten derartige Entlüftungsleitungen durch Aussparungen, also Rillen in der Unterkante des Deckels 3 verwirklicht sein, oder auch durch entsprechende Rippen oder Rillen in der Oberfläche der oberen Endscheibe 8. Jedenfalls stellt die Entlüftungsleitung 26 einen Kurzschluss dar, also eine Umgehung des Filtereinsatzes 6, so dass ungereinigtes Kühlmittel unter Umgehung des Filtereinsatzes 6 durch die Entlüftungsbohrung 27 auf die Reinseite des Filters gelangen kann. Da der Filter jedoch ohnehin lediglich als Nebenstromfilter ausgelegt ist und lediglich einen Teil des insgesamt umgepumpten Kühlmittelfilters, stellt diese Umgehung des Filtereinsatzes 6 keine relevante Beeinträchtigung der Filterfunktion dar.

Links von der Entlüftungsleitung 26 ist in den Fig. 5 und 6 jeweils eine Bohrung 29 ersichtlich, welche sich durch den Deckel 3 erstreckt. Sie ermöglicht zusammen mit der Entlüftungsleitung 26 und der Entlüftungsbohrung 27 die Entlüftung des Gehäuses 2, wenn der Filtereinsatz 6 in das Gehäuse 2 eingesetzt wird und dabei die zunächst im Gehäuse 2 befindliche Luft verdrängt wird, Durch die Bohrung 29 kann die aus dem Gehäuse 2 verdrängte Luft solange entweichen, bis die Dichtung 4 gegen das Gehäuse 2 gerät und ihm abdichtend anliegt.

Das Sperrventil 19 ist bei dem Ausführungsbeispiel der Fig. 5 und 6 lediglich beispielsweise links vom Rücklauf-Sperrventil 16 dargestellt, also auf der im Vergleich zu den anderen Ausführungsbeispielen gegenüberliegenden Seite.

Der Ventilkörper 20 des Sperrventils 19 ist durch Rippen 28 in axialer Richtung geführt, wobei diese Rippen im Gehäuse 2 angeformt sind, so dass auf technisch einfache und wirtschaftlich vorteilhafte Weise die Führung des Ventilkörpers 20 sichergestellt wird.

Die Länge des Gewindes zwischen Gehäuse 2 und Deckel 3 und die Lage der Dichtung 4 sind - wie insbesondere aus dem Vergleich zwischen den Fig. 5 und 6 hervorgeht - so aufeinander abgestimmt, dass das die Innen- und Außengewinde des Gehäuses 2 und des Deckels 3 miteinander kämmen, bevor der Dichtungsring an seiner im Gehäuse 2 vorgesehenen Dichtfläche anliegt. Auf diese Weise wird die Dichtung 4 beim Einschrauben des Deckels 3 in das Gehäuse 2 ebenfalls in das Gehäuse 2 eingezogen. Dies erleichtert einerseits die Handhabung beim Einschrauben des Deckels 3 und stellt zudem sicher, dass durch das Gewinde eine Art Zentrierung des Deckels 3 erfolgt, so dass eine möglichst gleichmäßige Anlage der Dichtung 4 ringsum an der zugeordneten Dichtfläche des Gehäuses 2 erfolgt und eine übermäßige, einseitige Belastung der Dichtung 4 vermieden wird, die gegebenenfalls zu einer Beschädigung der Dichtung führen könnte.

## Patentansprüche

1. Kühlmittel-Pflege-Einheit (1) für das Kühlmittel einer Verbrennungskraftmaschine,
mit einem becherartigen Gehäuse (2),
einem das Gehäuse (2) verschließenden, entfernbaren Deckel (3),
einem in dem Gehäuse (2) angeordneten, auswechselbaren Filtereinsatz (6), welcher am Deckel (3) lösbar gehalten ist,
einem Zulauf (14) für ungefiltertes Kühlmittel,
sowie einem Rücklauf (15), welcher gefiltertes Kühlmittel zum übrigen Kühlmittelkreislauf führt,
wobei im Rücklauf (15) ein Rücklaufsperrventil (16) angeordnet ist, welches im bestimmungsgemäßen Betrieb des Filters geöffnet ist,
und dass im Zulauf (14) ein wegbetätigtes Sperrventil (19) angeordnet ist,
**dadurch gekennzeichnet,**
**dass** das Sperrventil (19) durch den Filtereinsatz (6) in seiner Offenstellung gehalten wird,
und bei Entnahme des Filtereinsatzes (6) aus dem Gehäuse (2) schließt, bevor der Deckel (3) vollständig vom Gehäuse (2) getrennt ist,
wobei eine am Deckel (3) vorgesehene Dichtung (4) so weit von der Oberkante des Gehäuses (2) beabstandet vorgesehen ist, dass dieser Abstand größer ist als der Weg, welchen ein Ventilkörper (20) des Sperrventils (19) aus seiner Offenstellung bis in seine Schließstellung zurücklegen muss
derart, dass die Dichtheit zwischen dem Deckel (3) und
dem Gehäuse (2) auch dann noch sichergestellt ist, wenn der Deckel (3) bereits teilweise vom Gehäuse (2) entfernt ist und dass während der Abnahmebewegung des Deckels (3) das Sperrventil (19) schließt und gleichzeitig nach außen hin das Innere des Filters abgedichtet ist,
und wobei erst nach einer Wegstrecke, die zuverlässig zum Schließen des Sperrventils (19) geführt hat, der Deckel (3) von dem Gehäuse (2) so weit freikommt, dass auch die Dichtung (4) nicht mehr zwischen Deckel (3) und Gehäuse (2) wirksam ist.

2. Kühlmittel-Pflege-Einheit nach Anspruch 1,
**dadurch gekennzeichnet, dass** der Filtereinsatz (6) im Wesentlichen zylindrisch ausgestaltet ist, mit einer dem Sperrventil (19) benachbarten Endscheibe (12), und dass die Endscheibe (12) auf den Ventilkörper (20) des Sperrventils (19) einwirkt.

3. Kühlmittel-Pflege-Einheit nach Anspruch 2,
**gekennzeichnet durch** einen Stößel (22), der an den Ventilkörper (20) anschließt und sich bis zur Endscheibe (12) erstreckt.

4. Kühlmittel-Pflege-Eihheit nach Anspruch 3,
**gekennzeichnet durch** eine an der Endscheibe (12) vorgesehene Führungsnut (25), in welcher der Stößel (22) geführt ist.

5. Kühlmittel-Pflege-Einheit nach einem der Ansprüche 2 bis 4, **dadurch gekennzeichnet, dass** die Endscheibe (12) in dem Bereich, der auf das Sperrventil (19) einwirkt verstärkt ist.

6. Kühlmittel-Pflege-Einheit nach Anspruch 5,
**gekennzeichnet durch** einen umlaufende Wulst (23) an der Endscheibe.

7. Kühlmittel-Pflege-Einheit nach Anspruch 6,
**dadurch gekennzeichnet, dass** die Führungsnut (25) in der Wulst (23) ausgebildet ist.

8. Kühlmittel-Pflege-Einheit nach einem der vorhergehenden Ansprüche, **dadurch gekennzeichnet, dass** zwischen Deckel und Gehäuse eine Dichtung vorgesehen ist und dass sich Deckel und Gehäuse über eine bestimmte Strecke überlappen, derart, dass bei Abnahme des Deckels vom Gehäuse dieser Überlappungsbereich reduziert wird und das Sperrventil seine Schließstellung einnimmt, während sich der Deckel und das Gehäuse noch überlappen und die Dichtung noch zwischen diesen beiden, den Gehäuseinnenraum nach außen abdichtend, angeordnet ist.

## Claims

1. Coolant-service unit (1) for the coolant in an internal-combustion engine, with a cupular housing (2)
, a removable cover (3) which closes the housing (2),
a filter element (6) arranged in the housing which is retained detachably on the cover (3),
an inlet (14) for unfiltered coolant,
and an outlet (15) which returns the filtered coolant to the rest of the coolant circuit,
where an outlet stop valve (16) is arranged in the outlet (15) which is open when filter is in routine operation, and that a distance-operated stop valve (19) is arranged in the inlet (14),
**characterised in**
**that** the stop valve (19) is held in an open position by the filter element (6) and closes when the filter element (6) is removed from the housing (2) before the cover (3) is fully removed from the housing (2),
where a seal (4) provided on the cover (3) is located at such a distance from the upper edge of the housing (2), that this distance is greater than the distance which a valve body (20) of the stop valve (19) has to cover from its open position to its closed position,
in such a way that tightness between the cover (3) and the housing (2) is assured even when the cover (3) has been partially removed from the housing (2) and that the stop valve (19) closes during the removing motion of the cover (3) and at the same time the inside of the filter is sealed off towards the outside,
and where, only after covering a distance which reliably causes the stop valve (19) to close, the cover (3) is freed from the housing (2) to such an extent that the seal (4) is not long effective between the cover (3) and the housing (2).

2. Coolant-service unit according to claim 1,
**characterised in that** the filter element (6) is substantially cylindrical in shape with an end disk (12) adjacent to the stop valve (19) and that the end disk (12) acts on the valve body (20) of the stop valve (19).

3. Coolant-service unit according to claim 2,
**characterised by** a plunger (22), which adjoins the valve body (20) and extends to the end disk (12).

4. Coolant-service unit according to claim 3,
**characterised by** a guiding groove (25) provided on the end disk (12) in which the plunger (22) is guided.

5. Coolant-service unit according to any of the claims 2 to 4, **characterised in that** the end disk (12) is reinforced in the area which acts on the stop valve (19).

6. Coolant-service unit according to claim 5,
**characterised by** a circumferential bead (23) on the end disk.

7. Coolant-service unit according to claim 6,
**characterised in that** the guiding groove (25) is formed in the bead (23).

8. Coolant-service unit according to any of the above claims,
**characterised in that** a seal is provided between cover and housing and that the cover and the housing overlap one another for a certain distance in such a way that when the cover is removed from the housing, this overlapping area is reduced and the stop valve assumes its closed position while the cover and the housing still overlap and the seal is still located between the two, sealing the interior of the housing towards the outside.

## Revendications

1. Unité (1) servant à entretenir le fluide de refroidissement d'une machine à combustion interne,
comprenant un carter (2) en forme de gobelet,
un couvercle (3) amovible obturant le carter (2),
une cartouche filtrante (6) interchangeable agencée dans le carter (2), retenue de manière détachable contre le couvercle (3),
un orifice (14) par lequel afflue le fluide de refroidissement non filtré,
un orifice (15) par lequel le fluide de refroidissement filtré retourne au reste du circuit de fluide de refroidissement,
sachant que dans l'orifice de retour (15) est agencée une vanne à clapet antiretour (16) qui est ouverte lorsque le filtre se trouve en service conforme à sa destination,
et que dans l'orifice d'afflux (14) est agencée une vanne de fermeture (19) actionnée par déplacement,
**caractérisée en ce que**
la vanne de fermeture (19) est maintenue en position ouverte par la cartouche filtrante (6),
et qu'elle se ferme, lorsque l'on sort la cartouche filtrante (6) du carter (2), avant que le couvercle (3) soit entièrement détaché du carter (2),
sachant qu'un joint (4) prévu contre le couvercle (3) a été prévu à une distance telle de l'arête supérieure du carter (2) que cette distance est supérieure à la course que doit décrire un corps (20) de la vanne de fermeture (19) pour quitter sa position ouverte et gagner sa position fermée,
de sorte que l'étanchéité entre le couvercle (3) et le carter (2) est encore assurée lorsque le couvercle (3) a déjà été partiellement retiré du carter (2) et que pendant le mouvement d'enlèvement du couvercle (3) la vanne de fermeture (19) se ferme et simultanément l'intérieur du filtre se retrouve étanchéisé par rapport à l'extérieur,
et sachant que seulement après une course qui a conduit fiablement à obturer la vanne de fermeture (19), le couvercle (3) se retrouve dégagé du carter (2) de sorte que le joint (4) n'est plus opérant entre le couvercle (3) et le carter (2).

2. Unité selon la revendication 1 servant à entretenir le fluide de refroidissement,
**caractérisée en ce que** la cartouche filtrante (6) présente une configuration essentiellement cylindrique, avec une rondelle terminale (12) voisine de la vanne de fermeture (19), et **en ce que** la rondelle terminale (12) agit sur le corps (20) de la vanne de fermeture (19).

3. Unité selon la revendication 2 servant à entretenir le fluide de refroidissement,
**caractérisée par** un poussoir (22) qui se situe dans le prolongement du corps (20) de vanne et s'étend jusqu'à la rondelle terminale (12).

4. Unité selon la revendication 3 servant à entretenir le fluide de refroidissement,
**caractérisée par** une rainure de guidage (25) prévue contre la rondelle terminale (12) et dans laquelle est guidé le poussoir (22).

5. Unité selon l'une des revendications 2 à 4 servant à entretenir le fluide de refroidissement,
**caractérisée en ce que** la rondelle terminale (12) est renforcée dans la zone qui agit sur la vanne de fermeture (19).

6. Unité selon la revendication 5 servant à entretenir le fluide de refroidissement, **caractérisée par** un bourrelet périphérique (23) contre la rondelle terminale.

7. Unité selon la revendication 6 servant à entretenir le fluide de refroidissement,
**caractérisée en ce que** la rainure de guidage (25) est ménagée dans le bourrelet (23).

8. Unité selon l'une des revendications précédentes servant à entretenir le fluide de refroidissement,
**caractérisée en ce qu'**un joint est prévu entre le couvercle et le carter et que le couvercle et le carter se chevauchent sur une distance précise de sorte que lorsqu'on détache le couvercle du carter cette zone de chevauchement diminue et que la vanne de fermeture se rend en position de fermeture tandis que le couvercle et le carter se chevauchent encore et que le joint est encore situé entre les deux, étanchant ainsi le volume intérieur du carter par rapport à l'extérieur.
